# EUROPÄISCHE PATENTSCHRIFT

(11) **EP 3 106 298 B1**
(45) Veröffentlichungstag und Bekanntmachung des Hinweises auf die Patenterteilung: **15.08.2018**
(21) Anmeldenummer: 16174804.1
(22) Anmeldetag: 16.06.2016
(51) Int. Cl.: B32B 5/02, B32B 25/08, B32B 25/10, B32B 27/28, B32B 27/34, B32B 1/08, F16L 11/00, F16L 33/00, F16L 11/04, F16L 31/00, F16L 11/12, F16L 11/08

(54) **KRAFTSTOFFLEITUNG MIT LEITUNGSVERBINDERN**
FUEL HOSE WITH CONNECTORS
CONDUITE DE CARBURANT COMPRENANT DES RACCORDS

(30) Priorität: 18.06.2015 DE 102015109792
(43) Veröffentlichungstag der Anmeldung: 21.12.2016
(73) Patentinhaber: VERITAS AG, 63571 Gelnhausen (DE)
(72) Erfinder: van Hooren, Marc, 63579 Freigericht (DE); Pernikl, Norbert, 36381 Schlüchtern (DE); Zülch, Wilfried, 63571 Gelnhausen (DE)
(74) Vertreter: Patentship Patentanwaltsgesellschaft mbH

(56) Entgegenhaltungen:
- EP-A1- 1 582 339
- EP-A2- 0 875 362
- WO-A1-99/32820
- WO-A1-99/41073
- DE-U1-202014 103 393
- JP-A- 2006 194 433
- JP-A- 2006 281 507
- JP-A- 2008 030 289
- JP-A- 2013 087 822
- US-A1- 2002 036 020
- US-A1- 2006 042 712
- US-A1- 2006 070 677
- US-A1- 2006 174 961
- US-A1- 2008 023 094
- US-A1- 2012 216 903

## Beschreibung

Die vorliegende Erfindung betrifft eine Kraftstoffleitung mit Leitungsverbindern, insbesondere mit einem Leitungsverbinder, welcher insbesondere als ein Quick-Connector ausgebildet ist, sowie ein Verfahren zum Herstellen einer Kraftstoffleitung mit Leitungsverbindern, insbesondere mit einem Leitungsverbinder. Insbesondere betrifft die vorliegende Erfindung eine Kraftstoffleitung zum Fördern von Kraftstoff mit einem rohrförmigen Abschnitt, wobei der rohrförmige Abschnitt eine Innenschicht aus einem Hochtemperatur-Thermoplast und eine Außenschicht aus einem Elastomer aufweist, und mit einem Leitungsverbinder.

In einem Kraftfahrzeug kommt eine Vielzahl von Leitungen in Form von Schläuchen, Rohren und dergleichen zum Einsatz, wie beispielsweise eine Kraftstoffleitung in einem Motorraum eines Kraftfahrzeugs. Als ein Kraftstoff wird ein Stoff bezeichnet, der zur direkten Verbrennung in einer Verbrennungskraftmaschine, wie beispielsweise einem Motor, genutzt wird. Ein Kraftstoff weist in der Regel einen geringen Flammpunkt auf und kann in Kontakt mit Luft entzündet werden. Beim Zuführen von Kraftstoff durch die Kraftstoffleitung zum Motor des Kraftfahrzeuges muss für einen wirksamen Temperatur,- und Flammwiderstand der Kraftstoffleitung gesorgt werden, um einen ausreichenden Schutz der Kraftstoffleitung vor äußerer Flammeinwirkung, beispielsweise im Crashfall, sicherzustellen. Die herkömmlich verwendeten Kraftstoffleitungen umfassen unter anderem reine Elastomer-Kraftstoffleitungen, Mehrschicht-Kraftstoffstoffleitungen oder Kraftstoffleitungen aus einfachen Polyamiden. Die genannten herkömmlichen Mehrschicht-Kraftstoffleitungen und Kraftstoffleitungen aus einfachen Polyamiden weisen jedoch nur eine begrenzte thermische Beständigkeit und einen begrenzten Flammwiderstand auf und können zudem oftmals nur unter Einschränkungen im Motorraum eingesetzt werden.

In der US 2006/0174961 A1 ist ein Harzkraftstoffrohr mit Komponentenschichten aus thermoplastischen Harzen, welche eine ausreichende Wärmebeständigkeit aufweisen, offenbart.

In der EP 0 875 362 A2 ist eine mittels HF-Schweißen hergestellte Verbindung zwischen Rohr und Anbindungselement offenbart.

In der US 2012/0216903 A1 ist ein Mehrschichtschlauch, welcher eine hohe Flammresistenz aufweist und nicht von Wasserdampf durchdrungen werden kann, offenbart.

Vor diesem Hintergrund stellt sich die Aufgabe eine Kraftstoffleitung mit einem Leitungsverbinder bereitzustellen, welche eine vorteilhafte thermische Beständigkeit und einen vorteilhaften Flammwiderstand aufweist.

Diese Aufgabe wird durch den jeweiligen Gegenstand der unabhängigen Ansprüche gelöst. Vorteilhafte Ausführungsformen der Erfindung sind Gegenstand der abhängigen Ansprüche sowie der Figuren und der Beschreibung.

Gemäß einem ersten Aspekt der Erfindung wird die Aufgabe durch eine Kraftstoffleitung zum Fördern von Kraftstoff mit einem rohrförmigen Abschnitt, wobei der rohrförmige Abschnitt eine Innenschicht aus einem Hochtemperatur-Thermoplast und eine Außenschicht aus einem Elastomer aufweist, wobei der Flammwiderstand des Elastomers größer als der Flammwiderstand des Hochtemperatur-Thermoplasts ist, und einem Leitungsverbinder aus einem Hochtemperatur-Thermoplast, welcher an einem Ende des rohrförmigen Abschnitts angeordnet ist und den rohrförmigen Abschnitt umgreift, gelöst.

Durch die Verwendung eines Hochtemperatur-Thermoplasts als Material der Innenschicht und als Material des Leitungsverbinders wird sichergestellt, dass die Stabilität der Kraftstoffleitung und des Leitungsverbinders auch bei hohen Temperaturen gewährleistet wird. Als Hochtemperatur-Thermoplaste werden Thermoplaste bezeichnet, welche eine vorteilhafte Beständigkeit gegen hohe Temperaturen aufweisen, insbesondere Schmelzpunkte von mehr als 250 °C aufweisen, und insbesondere eine Dauergebrauchstemperatur von mehr als 135 °C aufweisen, wobei die Dauergebrauchstemperatur nach der DIN EN ISO 2578 bestimmt wird.

Der Flammwiderstand des Elastomers der Außenschicht ist größer als der Flammwiderstand des Hochtemperatur-Thermoplasts, wobei der Flammwiderstand nach der Norm UL-94 V-0 bestimmt ist. Das Elastomer besteht insbesondere aus Epichlorhydrin-Kautschuk (ECO), chlorsulfoniertem Polyethylen (CSM), Ethylen-Acrylat-Kautschuk (AEM), Ethyl-Vinyl-Acetat Polymer (EVM), Poly-Acrylat-Kautschuk (ACM) oder Mischungen davon. Das Elastomer kann insbesondere als ein temperaturbeständiges Elastomer ausgebildet sein, wobei das temperaturbeständige Elastomer eine vorteilhafte Beständigkeit gegen hohe Temperaturen aufweist. Durch den vorteilhaften Flammwiderstand des Elastomers wird sichergestellt, dass die Außenschicht die Stabilität der Kraftstoffleitung, insbesondere die Stabilität der Innenschicht bestehend aus einem Hochtemperatur-Thermoplast, gegen eine direkte Einwirkung von Feuer oder von Flammen erhöht. Gegenüber herkömmlichen Kraftstoffleitungen weist die erfindungsgemäße Kraftstoffleitung den Vorteil einer deutlich höheren thermischen Beständigkeit, einer besseren Verschweißbarkeit an der Außen- und Innenseite, sowie einer höhere Druckbeständigkeit und eine höhere Feuer,- bzw. Flammbeständigkeit auf. Diese verbesserten Eigenschaften sind für den Einsatz der Kraftstoffleitung in einem Motorraum erforderlich. Im Gegensatz zu Kraftstoffleitungen aus Standard-Polyamiden, wie beispielsweise PA 6, PA 6.6, PA 6.10, PA 6.12, PA 11 und PA 12, treten in der erfindungsgemäßen Kraftstoffleitung darüber hinaus keine Oligomerauswaschungen auf. Zudem werden geringe Herstellungskosten und optimierte Permeationseigenschaften gegenüber rein elastomeren Kraftstoffleitungen sichergestellt.

In einer vorteilhaften Ausführungsform ist der Leitungsverbinder ein Quick-Connector. Hierdurch wird beispielsweise der technische Vorteil erreicht, dass durch den Quick-Connector eine besonders wirksame fluiddichte Verbindung der Kraftstoffleitung mit einer weiteren Kraftstoffleitung ermöglicht wird, welche einfach und kostengünstig bereitgestellt werden kann.

In einer vorteilhaften Ausführungsform besteht der Hochtemperatur-Thermoplast aus Polyphthalamid (PPA), Polyphenylensulfid (PPS), Polysulfon (PSU), Polyethersulfon (PES), Polyetherketon (PEK), Polyetheretherketon (PEEK) oder Mischungen davon. Hierdurch wird beispielsweise der technische Vorteil erreicht, dass die genannten Hochtemperatur-Thermoplaste sowohl eine besonders hohe Temperaturbeständigkeit aufweisen, als auch eine hohe Beständigkeit gegen den durch die Kraftstoffleitung geleiteten Kraftstoff aufweisen. Als Hochtemperatur-Thermoplast besonders bevorzugt ist hierbei Polyphenylensulfid (PPS). Als Hochtemperatur-Thermoplast weiter bevorzugt ist ein modifiziertes, flexibles Polyphenylensulfid (PPS) mit einer Dehnung von mehr als 150 %. Durch die genannten Hochtemperatur-Thermoplaste kann eine besonders vorteilhafte Innenschicht der Kraftstoffleitung mit einem besonders vorteilhaften Leitungsverbinder bereitgestellt werden, wobei der Leitungsverbinder und die Innenschicht aus den gleichen oder aus unterschiedlichen Hochtemperatur-Thermoplasten bestehen können. Zudem weisen Kunststoffleitungen aus den genannten Hochtemperatur-Thermoplasten besonders vorteilhafte Permeationseigenschaften auf.

In einer vorteilhaften Ausführungsform besteht das Elastomer aus einem thermoplastischen Elastomer, einem thermoplastischen Elastomer-Vulkanisat oder Mischungen davon, wobei das thermoplastische Elastomer oder das thermoplastische Elastomer-Vulkanisat insbesondere mit Flammenschutzmitteln modifiziert ist. Das Elastomer kann insbesondere als ein temperaturbeständiges Elastomer ausgebildet sein, wobei das temperaturbeständige Elastomer eine vorteilhafte Beständigkeit gegen hohe Temperaturen aufweist. Hierdurch wird beispielsweise der technische Vorteil erreicht, dass durch die Verwendung der genannten Elastomer-Materialien in der Außenschicht eine besonders hohe Widerstandsfähigkeit gegen Feuereinwirkungen, wie z.B. Flammenschlag, erreicht wird. Damit wird eine besonders vorteilhafte Schutzwirkung der Außenschicht gegenüber Feuer, z.B. im Motorraum des Kraftfahrzeuges, sichergestellt. Durch den hohen Flammwiderstand der genannten Elastomere der Außenschicht kann zudem insbesondere eine bessere Abrieb- und Druckbeständigkeit der Kraftstoffleitung erreicht werden.

In einer vorteilhaften Ausführungsform ist der Leitungsverbinder mit dem rohrförmigen Abschnitt stoffschlüssig oder kraftschlüssig verbunden. Hierdurch wird beispielsweise der technische Vorteil erreicht, dass durch die stoffschlüssige, bzw. kraftschlüssige Verbindung zwischen dem Leitungsverbinder, wie z.B. einem Quick-Connector, und dem rohrförmigen Abschnitt eine besonders wirksame Befestigung des Leitungsverbinders an der Kraftstoffleitung sichergestellt wird. Dadurch wird gewährleistet, dass die Verbindung zwischen dem Leitungsverbinder, wie z.B. einem Quick-Connector, und dem rohrförmigen Abschnitt auch stabil bleibt, wenn Kraftstoffe unter hohem Druck durch die Kraftstoffleitung geleitet werden.

Gemäß einer vorteilhaften Ausführungsform ist der Leitungsverbinder mit dem rohrförmigen Abschnitt durch Reibschweißen stoffschlüssig verbunden. Durch eine durch Reibschweißen erhaltene stoffschlüssige Verbindung zwischen dem rohrförmigen Abschnitt und dem Leitungsverbinder, beispielsweise Quick-Connector, wird beispielsweise eine besonders stabile stoffschlüssige Verbindung zwischen dem Leitungsverbinder und dem rohrförmigen Abschnitt sichergestellt. Beim Reibschweißen werden der Leitungsverbinder, beispielsweise Quick-Connector, und der rohrförmige Abschnitt unter Druck relativ zueinander bewegt, wobei sich die Teile an den Kontaktflächen berühren. Durch die entstehende Reibung kommt es zu einer Erwärmung und zur Plastifizierung der Materialien und einer dadurch entstehenden Verbindung der Materialien.

Gemäß einer vorteilhaften Ausführungsform ist der rohrförmige Abschnitt als ein flexibler Schlauch ausgebildet. Hierdurch wird beispielsweise der technische Vorteil erreicht, dass durch die Ausbildung des rohrförmigen Abschnitts der Kraftstoffleitung als ein flexibler Schlauch eine besonders vorteilhafte und platzsparende Verlegung der Kraftstoffleitung in einem begrenzten Bauraum, wie z.B. in dem Motorraum eines Kraftfahrzeuges, sichergestellt werden kann. Die Flexibilität des rohrförmigen Abschnitts der Kraftstoffleitung ist vorteilhaft, um Bewegungen der Kraftstoffleitung, z.B. bei Vibrationen der Kraftstoffleitung in einem Motorraum eines Kraftfahrzeugs, auszugleichen.

Gemäß einer vorteilhaften Ausführungsform weist der rohrförmige Abschnitt eine Verstärkungsschicht auf, wobei die Verstärkungsschicht insbesondere ein Bestandteil der Außenschicht ist. Die Verstärkungsschicht kann alternativ zwischen der Innenschicht und der Außenschicht angeordnet sein. Hierdurch wird beispielsweise der technische Vorteil erreicht, dass durch die Verstärkungsschicht eine besonders wirksame Stabilisierung der Kraftstoffleitung erreicht wird. Durch die Verstärkungsschicht kann sichergestellt werden, dass die Kraftstoffleitung das Leiten von Kraftstoffen bei besonders hohem Druck ermöglicht. Die Verstärkungsschicht kann insbesondere mechanisch stabile Fasern umfassen, welche die Stabilität der Kraftstoffleitung erhöhen.

Gemäß einer vorteilhaften Ausführungsform ist die Verstärkungsschicht aus gewobenen, gewirkten, geflochtenen oder gestrickten Textil,- Glas,- oder Metallfasern, insbesondere Aramid,- Polyoxadiazol,- oder Glasfasern, gebildet. Die Textil,- Glas,- oder Metallfasern werden insbesondere in die Außenschicht eingemischt. Hierbei werden insbesondere Kurzfasern, z.B. aus Aramid, Polyoxadiazol oder Glasfasern, in die Außenschicht, z.B. eine TPV- oder TPE-Schicht, eingemischt, wobei dadurch die Druckfestigkeit und auch die Flammbeständigkeit der Kraftstoffleitung verbessert werden kann. Hierdurch wird beispielsweise der technische Vorteil erreicht, dass durch die Verwendung der genannten Materialien der Fasern der Verstärkungsschicht eine besonders wirksame Stabilisierung der Kraftstoffleitung bereitgestellt werden kann.

In einer vorteilhaften Ausführungsform ist der rohrförmige Abschnitt als ein Monorohr, insbesondere als ein Glattrohr, ausgebildet. Hierdurch wird beispielsweise der technische Vorteil erreicht, dass durch das Monorohr eine einstückige Kraftstoffleitung erhalten wird, welche besonders vorteilhaft in einem engen Bauraum, wie z.B. in einem Motorraum eines Kraftfahrzeuges, verlegt werden kann. Ein Glattrohr ist ein Rohr, welches eine ebene Oberfläche aufweist.

In einer vorteilhaften Ausführungsform ist der Leitungsverbinder mit einer weiteren Kraftstoffleitung verbindbar, um eine fluidleitende Verbindung zwischen der Kraftstoffleitung und der weiteren Kraftstoffleitung zu erhalten. Hierdurch wird beispielsweise der technische Vorteil erreicht, dass durch den Leitungsverbinder eine besonders wirksame fluidleitende Verbindung zwischen der Kraftstoffleitung und der weiteren Kraftstoffleitung erhalten wird, durch welche der Kraftstoff gefördert werden kann.

In einer vorteilhaften Ausführungsform ist die Kraftstoffleitung für einen Zeitraum von 3.000 Stunden bis 5.000 Stunden in einem Temperaturbereich zwischen -40 °C und 135 °C einsetzbar, und ist insbesondere für einen Zeitraum von 3.000 Stunden bei einer Temperatur von 150 °C einsetzbar. Hierdurch wird beispielsweise der technische Vorteil erreicht, dass durch die hohe Temperaturbeständigkeit der Kraftstoffleitung die Kraftstoffleitung für den genannten Zeitraum in dem genannten Temperaturbereich vorteilhaft verwendet werden kann, ohne dass es zu einem Stabilitätsverlust der Kraftstoffleitung kommt.

In einer vorteilhaften Ausführungsform ist die Kraftstoffleitung für einen Zeitraum von weniger als 100 Stunden in einem Temperaturbereich von -40 °C bis 200 °C, insbesondere in einem Temperaturbereich von -40 °C bis 180 °C, einsetzbar. Hierdurch wird beispielsweise der technische Vorteil erreicht, dass die Kraftstoffleitung das Leiten von Kraftstoff bei besonders hohen Temperaturen für einen kurzen Zeitraum ermöglicht. Die Kraftstoffleitung zeigt Widerstandsfähigkeit bei einer Temperatur von -40 °C und kann Temperaturen von bis zu 200 °C, insbesondere Temperaturen von bis zu 180 °C für einen Zeitraum von weniger als 100 Stunden widerstehen. Dadurch kann die Kraftstoffleitung einen kurzfristigen Temperaturanstieg in dem Bauraum, insbesondere Motorraum, unbeschadet überstehen. Die positive Einsetzbarkeit der Kraftstoffleitung für einen Zeitraum von weniger als 100 Stunden in dem Temperaturbereich zwischen -40 °C und 200 °C, insbesondere in einem Temperaturbereich von -40 °C bis 180 °C, gilt als gegeben, wenn es zu keinem Stabilitätsverlust der Kraftstoffleitung kommt.

In einer vorteilhaften Ausführungsform weist die Kraftstoffleitung einen Innendurchmesser von 6 mm auf und/oder weist die Innenschicht der Kraftstoffleitung eine Wandstärke von 1 mm auf und/oder weist die Außenschicht der Kraftstoffleitung eine Wandstärke zwischen 1,5 mm und 3 mm, insbesondere 2,5 mm, auf. Hierdurch wird beispielsweise der technische Vorteil erreicht, dass durch die genannten Parameter der Kraftstoffleitung eine besonders wirksame Leitung von Kraftstoff durch die Kraftstoffleitung sichergestellt wird, wobei die Kraftstoffleitung einen vorteilhaften Widerstand gegen hohe Temperaturen und einen vorteilhaften Flammwiderstand aufweist.

Gemäß einem zweiten Aspekt der Erfindung wird die Aufgabe durch ein Verfahren zum Herstellen einer Kraftstoffleitung mit einem Leitungsverbinder gelöst, wobei das Verfahren die folgenden Schritte umfasst, Bereitstellen einer Kraftstoffleitung mit einem rohrförmigen Abschnitt, welcher eine Innenschicht aus einem Hochtemperatur-Thermoplast aufweist, Extrudieren einer Außenschicht aus einem Elastomer auf die Innenschicht des rohrförmigen Abschnitts, wobei der Flammwiderstand des Elastomers größer als der Flammwiderstand des Hochtemperatur-Thermoplasts ist, Anordnen eines Leitungsverbinders an einem Ende des rohrförmigen Abschnitts, wobei der Leitungsverbinder den rohrförmigen Abschnitt umgreift, und Verbinden des Leitungsverbinders mit dem rohrförmigen Abschnitt.

Hierdurch wird beispielsweise der technische Vorteil erreicht, dass durch das Verfahren eine Kraftstoffleitung mit einem Leitungsverbinder vorteilhaft hergestellt werden kann. In dem Verfahren wird die Außenschicht auf die Innenschicht des rohrförmigen Abschnitts extrudiert. Hierbei kann die Extrusion als eine Co-Extrusion, insbesondere bei der Verwendung eines thermoplastischen Elastomers oder eines thermoplastischen Elastomer-Vulkanisats, durchgeführt werden, während der sowohl die Innenschicht als auch die Außenschicht in einem gemeinsamen Verfahrensschritt extrudiert werden. Alternativ kann zuerst die Innenschicht des rohrförmigen Abschnitts extrudiert werden und in einem zweiten sich anschließenden Extrusionsschritt die Außenschicht auf die Innenschicht extrudiert werden. Nach der Extrusion des rohrförmigen Abschnitts wird der Leitungsverbinder an dem rohrförmigen Abschnitt angeordnet und mit dem rohrförmigen Abschnitt verbunden. Gemäß einer Ausführungsform umfasst der Leitungsverbinder einen Quick-Connector. Hierdurch wird beispielsweise der technische Vorteil erreicht, dass durch den Quick-Connector ein besonders wirksames fluiddichtes Verbinden der Kraftstoffleitung mit einer weiteren Kraftstoffleitung ermöglicht wird, wobei die Verbindung einfach und kostengünstig bereitgestellt werden kann.

Gemäß dem zweiten Aspekt der Erfindung umfasst der Schritt des Verbindens das stoffschlüssige Verbinden des Leitungsverbinders mit dem rohrförmigen Abschnitt durch Reibschweißen. Hierdurch wird beispielsweise der technische Vorteil erreicht, dass durch den Reibschweißvorgang eine besonders wirksame stoffschlüssige Verbindung zwischen dem Leitungsverbinder und dem rohrförmigen Abschnitt sichergestellt wird.

Gemäß dem zweiten Aspekt der Erfindung umfasst das Verfahren ferner den folgenden Schritt, Entfernen eines Teiles der Außenschicht an dem Ende des rohrförmigen Abschnitts. Hierdurch wird beispielsweise der technische Vorteil erreicht, dass durch das Entfernen der Außenschicht von dem rohrförmigen Abschnitt der Kraftstoffleitung an dem Bereich, an dem der Leitungsverbinder angeordnet wird, eine besonders wirksame stoffschlüssige Verbindung zwischen dem Leitungsverbinder und dem rohrförmigen Abschnitt sichergestellt wird.

Ausführungsbeispiele der Erfindung sind in den Zeichnungen dargestellt und werden im Folgenden näher beschrieben.

Es zeigen:
- Fig. 1: eine Vorderansicht einer Kraftstoffleitung ohne einen Leitungsverbinder;
- Fig. 2: eine Seitenansicht einer Kraftstoffleitung mit einem Leitungsverbinder; und
- Fig. 3: einen Ablauf eines Verfahrens zum Herstellen einer Kraftstoffleitung mit einem Leitungsverbinder.

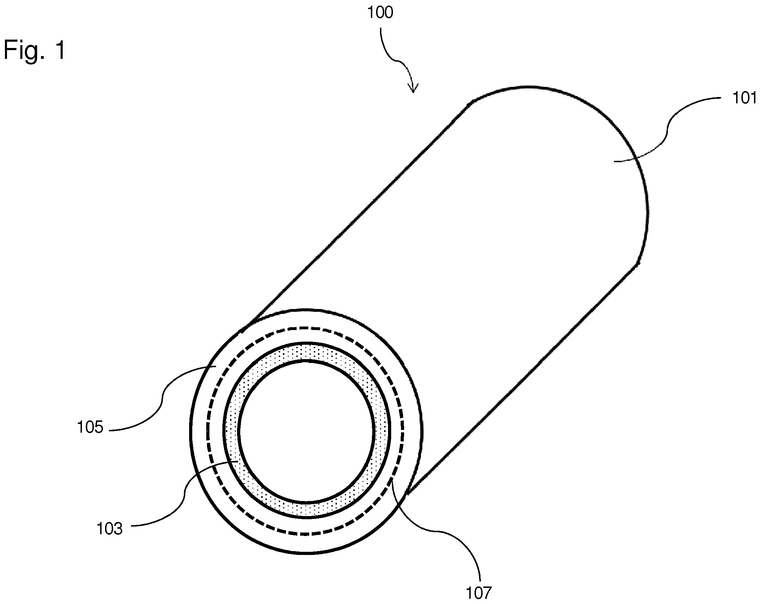

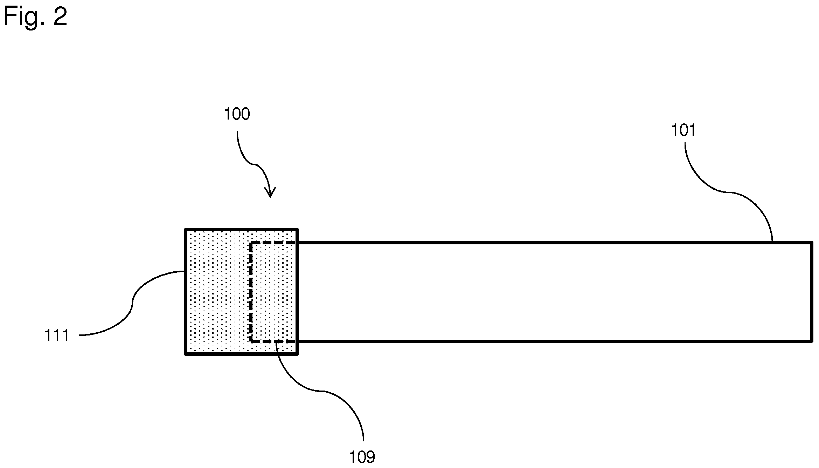

Die Figuren 1 und 2 zeigen eine Seitenansicht, bzw. eine Vorderansicht einer Kraftstoffleitung 100 gemäß einer Ausführungsform zum Transport von Kraftstoff, beispielsweise in einem Kraftfahrzeug.

In Figur 1 ist eine Vorderansicht einer Kraftstoffleitung ohne Leitungsverbinder dargestellt. Die Kraftstoffleitung 100 umfasst einen rohrförmigen Abschnitt 101, welcher aus drei aufeinander angeordneten Schichten besteht. Der rohrförmige Abschnitt 101 besteht insbesondere aus einer Innenschicht 103, aus einer Außenschicht 105 und einer Verstärkungsschicht 107, wobei die Verstärkungsschicht 107 Bestandteil der Außenschicht 105 ist. Die Verstärkungsschicht 107 besteht insbesondere aus gewobenen, gewirkten, geflochtenen oder gestrickten Textil,- Glas,- oder Metallfasern, und besteht insbesondere aus Aramid,- Polyoxadiazol,- oder Glasfasern, welche in die Außenschicht 105 eingemischt sind.

Die Innenschicht 103 besteht aus einem Hochtemperatur-Thermoplast, insbesondere aus Polyphthalamid (PPA), Polyphenylensulfid (PPS), Polysulfon (PSU), Polyethersulfon (PES), Polyetherketon (PEK), Polyetheretherketon (PEEK), Polyethylenimin (PEI) oder Mischungen davon. Die genannten Hochtemperatur-Thermoplaste zeichnen sich durch hohe Schmelztemperaturen von über 250 °C aus, wodurch die genannten Hochtemperatur-Thermoplaste in Hochtemperaturbereichen, z.B. im Motorraum eines Kraftfahrzeugs, verwendet werden können.

Die Außenschicht 105 besteht aus einem Elastomer, insbesondere aus einem Elastomer, welches einen Flammwiderstand aufweist, welcher größer als der Flammwiderstand des Hochtemperatur-Thermoplasts ist. Das Elastomer besteht beispielsweise aus einem thermoplastischen Elastomer, einem thermoplastischen Elastomer-Vulkanisat oder Mischungen davon, wobei das thermoplastische Elastomer oder das thermoplastische Elastomer-Vulkanisat insbesondere mit Flammenschutzmitteln modifiziert ist. Das Elastomer weist insbesondere ebenfalls eine hohe Temperaturbeständigkeit auf. Die Materialeigenschaften des Elastomers werden selbst bei Kontakt mit Feuer oder bei Kontakt mit einer Flamme für eine gewisse Dauer nicht reduziert. Folglich sichert die Außenschicht 105 des rohrförmigen Abschnitts 101 der Kraftstoffleitung 100 die Beständigkeit der Kraftstoffleitung 100 im Brandfall. Dadurch wird gewährleistet, dass gegebenenfalls durch die Kraftstoffleitung 100 geleiteter Kraftstoff bei einem Feuer nicht entzündet wird.

Die Verstärkungsschicht 107 ist Bestandteil der Außenschicht 105, wobei die Verstärkungsschicht 107 insbesondere zumindest eine gewobene, gewirkte, geflochtene, oder gestrickte Textil,- Glas,- oder Metallfaser, insbesondere eine Aramid,- Polyoxadiazol,- oder Glasfaser, umfasst. Durch die Verstärkungsschicht 107 wird der rohrförmige Abschnitt 101 der Kraftstoffleitung 100 verstärkt, wodurch Kraftstoff mit hohem Druck durch die Kraftstoffleitung 100 geleitet werden kann, ohne dass es zu Beschädigungen der Kraftstoffleitung 100 kommt.

Der rohrförmige Abschnitt 101 der Kraftstoffleitung 100 ist insbesondere als ein Monorohr, z.B. als ein Glattrohr, ausgebildet. Der rohrförmige Abschnitt 101 kann als ein Schlauch ausgebildet sein, der flexible Eigenschaften aufweist. Durch die flexiblen Eigenschaften des Schlauchs kann ein Längen- und Bewegungsausgleich des Schlauchs sichergestellt werden.

In Figur 2 ist eine Seitenansicht einer Kraftstoffleitung mit einem Leitungsverbinder 111 dargestellt. Die Kraftstoffleitung 100 weist einen rohrförmigen Abschnitt 101 mit einem Ende 109 auf, welches in Figur 2 nur schematisch dargestellt ist. An dem Ende 109 ist ein Leitungsverbinder 111, insbesondere ein Quick-Connector, angeordnet. Der Leitungsverbinder 111 ist an dem Ende 109 mit dem rohrförmigen Abschnitt 101 der Kraftstoffleitung 100 stoffschlüssig verbunden, wobei die stoffschlüssige Verbindung insbesondere durch einen Reibschweißvorgang erreicht wird.

Während des Reibschweißvorgangs wird durch Reibung zwischen dem rohrförmigen Abschnitt 101 der Kraftstoffleitung 100 und dem Leitungsverbinder 111 Wärme erzeugt. Durch die entstehende Wärme kommt es zu einem partiellen Schmelzvorgang der Kunststoffe des rohrförmigen Abschnitts 101 der Kraftstoffleitung 100 und des Leitungsverbinders 111. Nach dem sich anschließenden Aushärten der Kunststoffe wird eine stoffschlüssige Verbindung zwischen dem Leitungsverbinder 111 und dem rohrförmigen Abschnitt 101 der Kraftstoffleitung 100 und dadurch eine besonders stabile Verbindung zwischen beiden Teilen erreicht, wobei die Verbindung selbst beim Leiten von Kraftstoff bei hohen Temperaturen und bei hohem Druck stabil bleibt.

Der Leitungsverbinder 111 kann insbesondere mit einer weiteren Kraftstoffleitung stoffschlüssig verbunden werden. Dadurch kann durch den Leitungsverbinder 111 eine wirksame fluidleitende Verbindung zwischen der Kraftstoffleitung 100 und der weiteren Kraftstoffleitung erhalten werden. Dadurch wird sichergestellt, dass der durch die Kraftstoffleitung 100 und durch die weitere Kraftstoffleitung geleitete Kraftstoff nicht durch den Leitungsverbinder 111 austritt und sich gegebenenfalls entzünden kann.

Gegenüber herkömmlich verwendbaren Mehrschichtrohren besteht ein Vorteil der erfindungsgemäßen Kraftstoffleitung 100 darin, dass die Kraftstoffleitung 100 eine deutlich höhere thermische Beständigkeit, ein besseres Verschweißen mit dem Leitungsverbinder 111 ermöglicht und darüber hinaus eine höhere Druck,- und Feuerbeständigkeit aufweist. Diese Eigenschaften sind für den Einsatz einer Kraftstoffleitung 100 in einem hitzeexponiertem Bereich, wie z.B. dem Motorbereich in einem Kraftfahrzeug, erforderlich. Im Gegensatz zu Leitungen aus Polyamiden treten in der erfindungsgemäßen Kraftstoffleitung 100 mit einem rohrförmigen Abschnitt 101 aus temperaturbeständigem Kunststoff keine Oligomerauswaschungen auf. Ferner ist die Kraftstoffleitung 100 kostengünstig und einfach herzustellen und weist optimierte Permeationseigenschaften gegenüber elastomeren Kraftstoffleitungen 100 auf.

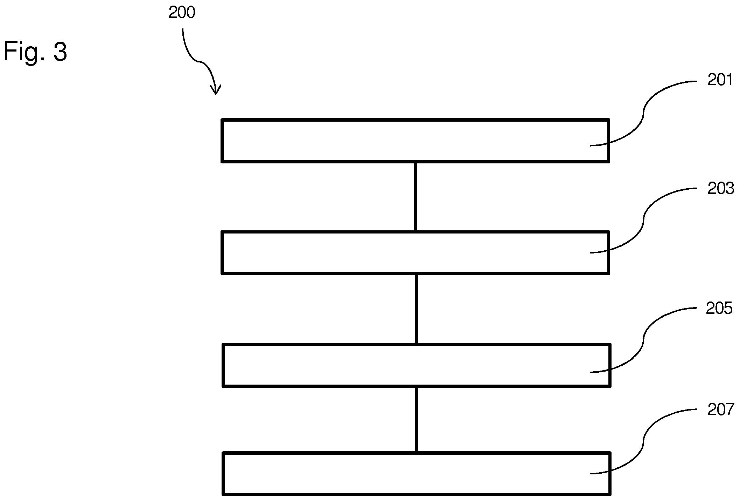

Figur 3 zeigt einen Ablauf eines Verfahrens 200 zum Herstellen einer Kraftstoffleitung 100 mit einem Leitungsverbinder, welcher gemäß Figur 2 beschrieben ist.

Das Verfahren 200 umfasst als ersten Schritt das Bereitstellen 201 einer Kraftstoffleitung 100 mit einem rohrförmigen Abschnitt 101, welcher eine Innenschicht 103 aus einem Hochtemperatur-Thermoplast aufweist.

Das Verfahren 200 umfasst als weiteren Schritt das Extrudieren 203 einer Außenschicht 105 aus einem Elastomer auf die Innenschicht des rohrförmigen Abschnitts 101, wobei der Flammwiderstand des Elastomers größer als der Flammwiderstand des Hochtemperatur-Thermoplasts ist. Hierbei kann das Extrudieren 203 der Außenschicht 105 entweder in einem gemeinsamen Extrusionsprozess als Co-Extrusionsprozess mit der Innenschicht 103 des rohrförmigen Abschnitts 101 der Kraftstoffleitung 100 durchgeführt werden. Alternativ kann das Extrudieren 203 der Außenschicht 105 sich an das Extrudieren der Innenschicht 103 des rohrförmigen Abschnitts 101 der Kraftstoffleitung 100 anschließen und in einem separaten Verfahrensschritt durchgeführt werden.

Das Verfahren 200 umfasst als einen weiteren Schritt das Entfernen eines Teiles der Außenschicht 105 an dem Ende 109 des rohrförmigen Abschnitts 101. Das Verfahren 200 umfasst als weiteren Schritt das Anordnen 205 eines Leitungsverbinders 111, wie beispielweise ein Quick-Connector, an einem Ende 109 des rohrförmigen Abschnitts 101 der Kraftstoffleitung 100, wobei der Leitungsverbinder 111 den rohrförmigen Abschnitt 101 umgreift.

Das Verfahren 200 umfasst als weiteren Schritt das Verbinden 207 des Leitungsverbinders 111 mit dem rohrförmigen Abschnitt 101, wobei das Verbinden 207 ein stoffschlüssiges Verbinden umfasst. Das stoffschlüssige Verbinden 207 des Leitungsverbinders 111, insbesondere Quick-Connector, mit dem rohrförmigen Abschnitt 101 wird durch einen Reibschweißvorgang durchgeführt. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Kraftstoffleitung
- 101: Rohrförmiger Abschnitt
- 103: Innenschicht
- 105: Außenschicht
- 107: Verstärkungsschicht
- 109: Ende des rohrförmigen Abschnitts
- 111: Leitungsverbinder
- 200: Verfahren
- 201: Verfahrensschritt: Bereitstellen einer Kraftstoffleitung
- 203: Weiterer Verfahrensschritt: Extrudieren einer Außenschicht auf den rohrförmigen Abschnitt
- 205: Weiterer Verfahrensschritt: Anordnen eines Leitungsverbinders an einem Ende des rohrförmigen Abschnitts
- 207: Weiterer Verfahrensschritt: Verbinden eines Leitungsverbinders mit dem rohrförmigen Abschnitt

## Patentansprüche

1. Kraftstoffleitung (100) zum Fördern von Kraftstoff mit:
einem rohrförmigen Abschnitt (101), wobei der rohrförmige Abschnitt (101) eine Innenschicht (103) aus einem Hochtemperatur-Thermoplast und eine Außenschicht (105) aus einem Elastomer aufweist,
wobei der Hochtemperatur-Thermoplast einen Schmelzpunkt von mehr als 250 °C aufweist,
wobei der Flammwiderstand des Elastomers größer als der Flammwiderstand des Hochtemperatur-Thermoplasts ist; und
einem Leitungsverbinder (111) aus einem Hochtemperatur-Thermoplast, welcher an einem Ende des rohrförmigen Abschnitts (101) angeordnet ist und den rohrförmigen Abschnitt (101) umgreift, wobei der Hochtemperatur-Thermoplast einen Schmelzpunkt von mehr als 250 °C aufweist.

2. Kraftstoffleitung (100) nach Anspruch 1, wobei der Leitungsverbinder (111) ein Quick-Connector ist.

3. Kraftstoffleitung (100) nach Anspruch 1 oder 2, wobei der Hochtemperatur-Thermoplast aus Polyphthalamid (PPA), Polyphenylensulfid (PPS), Polysulfon (PSU), Polyethersulfon (PES), Polyetherketon (PEK), Polyetheretherketon (PEEK) oder Mischungen davon, besteht.

4. Kraftstoffleitung (100) nach einem der vorangehenden Ansprüche, wobei das Elastomer aus einem thermoplastischen Elastomer, einem thermoplastischen Elastomer-Vulkanisat oder Mischungen davon, besteht, wobei das thermoplastische Elastomer oder das thermoplastische Elastomer-Vulkanisat insbesondere mit Flammenschutzmitteln modifiziert ist.

5. Kraftstoffleitung (100) nach einem der vorangehenden Ansprüche, wobei der Leitungsverbinder (111) mit dem rohrförmigen Abschnitt (101) stoffschlüssig oder kraftschlüssig verbunden ist.

6. Kraftstoffleitung (100) nach Anspruch 5, wobei der Leitungsverbinder (111) mit dem rohrförmigen Abschnitt (101) durch Reibschweißen stoffschlüssig verbunden ist.

7. Kraftstoffleitung (100) nach einem der vorangehenden Ansprüche, wobei der rohrförmige Abschnitt (101) als ein flexibler Schlauch ausgebildet ist.

8. Kraftstoffleitung (100) nach einem der vorangehenden Ansprüche, wobei der rohrförmige Abschnitt (101) eine Verstärkungsschicht (107) aufweist, wobei die Verstärkungsschicht (107) insbesondere ein Bestandteil der Außenschicht (105) ist.

9. Kraftstoffleitung (100) nach Anspruch 8, wobei die Verstärkungsschicht (107) aus gewobenen, gewirkten, geflochtenen oder gestrickten Textil,- Glas,- oder Metallfasern, insbesondere Aramid,- Polyoxadiazol,- oder Glasfasern, gebildet ist.

10. Kraftstoffleitung (100) nach einem der vorangehenden Ansprüche, wobei der rohrförmige Abschnitt (101) als ein Monorohr, insbesondere als ein Glattrohr, ausgebildet ist.

11. Kraftstoffleitung (100) nach einem der vorangehenden Ansprüche, wobei der Leitungsverbinder (111) mit einer weiteren Kraftstoffleitung verbindbar ist, um eine fluidleitende Verbindung zwischen der Kraftstoffleitung (100) und der weiteren Kraftstoffleitung zu erhalten.

12. Verfahren (200) zum Herstellen einer Kraftstoffleitung (100) mit einem Leitungsverbinder (111), wobei das Verfahren (200) die folgenden Schritte umfasst:
Bereitstellen (201) einer Kraftstoffleitung (100) mit einem rohrförmigen Abschnitt (101), welcher eine Innenschicht (103) aus einem Hochtemperatur-Thermoplast aufweist, wobei der Hochtemperatur-Thermoplast einen Schmelzpunkt von mehr als 250 °C aufweist,
Extrudieren (203) einer Außenschicht (105) aus einem Elastomer auf die Innenschicht (103) des rohrförmigen Abschnitts (101), wobei der Flammwiderstand des Elastomers größer als der Flammwiderstand des Hochtemperatur-Thermoplasts ist,
Anordnen (205) eines Leitungsverbinders (111) an einem Ende (109) des rohrförmigen Abschnitts (101), wobei der Leitungsverbinder (111) den rohrförmigen Abschnitt (101) umgreift,
Verbinden (207) des Leitungsverbinders (111) mit dem rohrförmigen Abschnitt (101), wobei der Schritt des Verbindens (205) das stoffschlüssige Verbinden des Leitungsverbinders (111) mit dem rohrförmigen Abschnitt (101) durch Reibschweißen umfasst, und
Entfernen eines Teiles der Außenschicht (105) an dem Ende (109) des rohrförmigen Abschnitts (101).

13. Verfahren (200) nach Anspruch 12, wobei der Leitungsverbinder (111) einen Quick-Connector umfasst.

## Claims

1. Fuel line (100) for pumping fuel with:
a tubular portion (101), wherein the tubular portion (101) comprises an inner layer (103) of a high-temperature thermoplastic and an outer layer (105) of an elastomer,
wherein the high-temperature thermoplastic has a melting point of more than 250 °C,
wherein the flame resistance of the elastomer is greater than the flame resistance of the high-temperature thermoplastic; and
a line connector (111) made of high-temperature thermoplastic arranged at one end of the tubular portion (101) and engaging around the tubular portion (101), the high-temperature thermoplastic having a melting point greater than 250 °C.

2. A fuel line (100) according to claim 1, wherein the line connector (111) is a quick-connector.

3. A fuel line (100) according to claim 1 or 2, wherein the high-temperature thermoplastic is polyphthalamide (PPA), polyphenylene sulfide (PPS), polysulfone (PSU), polyethersulfone (PES), polyetherketone (PEK), polyetheretherketone or mixtures thereof.

4. A fuel line (100) according to one of the preceding claims, wherein the elastomer consists of a thermoplastic elastomer, a thermoplastic elastomer vulcanizate or mixtures thereof, and wherein the thermoplastic elastomer or the thermoplastic elastomer vulcanizate is modified. in particular with flame-retardants.

5. A fuel line (100) according to one of the preceding claims, wherein the line connector (111) with the tubular portion (101) is connected in a bonding or form-fitting manner.

6. A fuel line (100) according to claim 5, wherein the line connector (111) is bonded to the tubular portion (101) by friction welding.

7. A fuel line (100) according to one of the preceding claims, wherein the tubular portion (101) is formed as a flexible hose.

8. A fuel line (100) according to one of the preceding claims, wherein the tubular portion (101) comprises a reinforcing layer (107), the reinforcing layer (107) being, in particular, a component of the outer layer (105).

9. A fuel line (100) according to claim 8, wherein the reinforcing layer (107) is formed of woven, knitted, braided or interlaced textile, glass, or metal fibers, especially aramid, polyoxadiazole, or glass fibers.

10. A fuel line (100) according to one of the preceding claims, wherein the tubular portion (101) is formed as a monopipe, in particular a smooth pipe.

11. A fuel line (100) according to one of the preceding claims, wherein the line connector (111) may be connected to another fuel line in order to provide a fluid conducting connection between the fuel line (100) and the other fuel line.

12. A method (200) for producing a fuel line (100) with a line connector (111), wherein the method (200) comprises the following steps:
Providing (201) a fuel line (100) having a tubular portion (101), which has an inner layer (103) of a high-temperature thermoplastic, said high-temperature thermoplastic having a melting point greater than 250 °C,
extruding (203) an outer layer (105) made of an elastomer onto the inner layer (103) of the tubular portion (101), wherein the flame resistance of the elastomer is greater than the flame resistance of the high-temperature thermoplastic,
arranging (205) a line connector (111) at one end (109) of the tubular portion (101), wherein the line connector (111) engages around the tubular portion (101).
Connecting (207) the lead connector (111) to the tubular portion (101), wherein the step of connecting (205) comprises bonding the line connector (111) to the tubular portion (101) by friction welding, and
Removing a portion of the outer layer (105) at the end (109) of the tubular portion (101).

13. A method (200) according to claim 12, wherein the line connector (111) comprises a quick-connector.

## Revendications

1. Conduite de carburant (100) servant à refouler du carburant comportant :
une partie tubulaire (101), ladite partie tubulaire (101) présentant une couche intérieure (103) en matière thermoplastique haute température et une couche extérieure (105) en élastomère,
la matière thermoplastique haute température présentant un point de fusion de plus de 250 °C,
la résistance aux flammes de l'élastomère étant supérieure à la résistance aux flammes de la matière thermoplastique haute température ; et
un raccord (111) en matière thermoplastique haute température qui est disposé à une extrémité de la partie tubulaire (101) et enserre la partie tubulaire (101), la matière thermoplastique haute température présentant un point de fusion de plus de 250 °C.

2. Conduite de carburant (100) selon la revendication 1, le raccord (111) étant un raccord rapide.

3. Conduite de carburant (100) selon la revendication 1 ou 2, la matière thermoplastique haute température étant composée de polyphthalamide (PPA), de polysulfure de phénylène (PPS), de polysulfone (PSU), de polyéthersulfone (PES), de polyéthercétone (PEK), de polyétheréthercétone (PEEK) ou des mélanges de ces derniers.

4. Conduite de carburant (100) selon l'une des revendications précédentes, l'élastomère étant composé d'un élastomère thermoplastique, d'un vulcanisat thermoplastique d'élastomère ou de mélanges de ces derniers, l'élastomère thermoplastique ou le vulcanisat thermoplastique d'élastomère étant modifié notamment avec des ignifugeants.

5. Conduite de carburant (100) selon l'une des revendications précédentes, le raccord (111) étant relié à la partie tubulaire (101) par liaison de matière ou par adhérence.

6. Conduite de carburant (100) selon la revendication 5, le raccord (111) étant relié par liaison de matière à la partie tubulaire (101) par soudage par friction.

7. Conduite de carburant (100) selon l'une des revendications précédentes, la partie tubulaire (101) étant formée comme un tuyau flexible.

8. Conduite de carburant (100) selon l'une des revendications précédentes, la partie tubulaire (101) présentant une couche de renforcement (107), ladite couche de renforcement (107) étant notamment un composant de la couche extérieure (105).

9. Conduite de carburant (100) selon la revendication 8, la couche de renforcement (107) étant composée de fibres textiles, de verre ou métalliques, notamment de fibres d'aramide, en polyoxadiazole ou de verre, tissées, tressées ou tricotées.

10. Conduite de carburant (100) selon l'une des revendications précédentes, la partie tubulaire (101) étant formée comme un mono-tuyau, notamment comme un tuyau lisse.

11. Conduite de carburant (100) selon l'une des revendications précédentes, le raccord (111) pouvant être raccordé à une autre conduite de carburant afin de conserver une conduite d'écoulement de fluide entre la conduite de carburant (100) et l'autre conduite de carburant.

12. Procédé (200) de fabrication d'une conduite de carburant (100) comprenant un raccord (111), le procédé (200) comprenant les étapes suivantes :
prévoir (201) une conduite de carburant (100) comportant une partie tubulaire (101), laquelle présente une couche intérieure (103) en une matière thermoplastique haute température, la matière thermoplastique haute température présentant un point de fusion de plus de 250 °C,
extruder (203) une couche extérieure (105) en un élastomère sur la couche intérieure (103) de la partie tubulaire (101), la résistance aux flammes de l'élastomère étant supérieure à la résistance aux flammes de la matière thermoplastique haute température,
disposer (205) un raccord (111) à une extrémité (109) de la partie tubulaire (101), le raccord (111) enserrant la partie tubulaire (101),
raccorder (207) le raccord (111) à la partie tubulaire (101), l'étape de raccordement (205) comprenant la liaison par matière du raccord (111) à la partie tubulaire (101) par soudage par friction, et
éliminer une partie de la couche extérieure (105) sur l'extrémité (109) de la partie tubulaire (101).

13. Procédé (200) selon la revendication 12, le raccord (111) comprenant un raccord rapide.
